# EUROPEAN PATENT APPLICATION

(11) **EP 1 873 709 A1**
(43) Date of publication of application: **02.01.2008**
(21) Application number: 07252629.6
(22) Date of filing: 28.06.2007
(51) Int. Cl.: G06Q 40/00

(54) **Portfolio selection for (healthcare) technology investment**

(30) Priority: 29.06.2006 US 476830
(71) Applicant: X-Shares Advisors LLC, New York, NY 10170 (US)
(72) Inventor: Feldman, Jeffrey L, Princeton, New Jersey 08540 (US)
(74) Representative: Maury, Richard Philip

(57) **Abstract**

An investment vehicle is formed according to novel selection methods which organize investment according to investor definitions of technology application. For example, healthcare companies can be organized according to their involvement with particular diagnostic or therapeutic modalities. The investment vehicle can then be used to back a structured note for use with a health savings account.

## Description

### Reference to Related Application

The present application is a continuation-in-part of U.S. Patent Application No. 10/920,267, filed August 18, 2004, which claims the benefit of U.S. Provisional Patent Application No. 60/539,331, filed January 28, 2004. The disclosures of both of the above-cited applications are hereby incorporated by reference in their entireties into the present disclosure.

### Field of the Invention

The present invention relates to the selection of portfolios and their management and more particularly to a system and method for investing in a 'vertical' market sector in healthcare. The present invention has general applicability to forming investment vehicles.

### Description of Related Art

Portfolio investing is generally considered to mitigate risk. Various methodologies for selection of elements of a portfolio as well as allocation of resources and maintenance have been developed and are in widespread use. Numerous strategies are described in an extensive body of literature and practiced broadly in the fund management industry. It is common practice to create, using various selection strategies, field or sector-specific investment portfolios. Such portfolios require classification within the sector from which companies are drawn according to generally agreed upon criteria. As examples, portfolios may be drawn from 'the financial sector', 'manufacturing', transportation, energy, defense, healthcare, mining and so forth. The rationale for such structuring of investment choices generally is related to what are believed to be shared attributes / responses of companies grouped within such portfolios. Within such broad classifications, it is also common to create sub-groupings according to attributes such as 'product', end-user, technology base etc.. The terms 'vertical' and 'horizontal' are often used to characterize markets which in the first instance are particular to a cluster of companies selected according to basic technology and end-user (such as supply chain companies in relation to the energy sector) and in the second instance are related to sector characteristics of companies (such as energy retailers). It is obvious that the designation of axes is an arbitrary but useful convention.

Managed and passive investment vehicles known in the art include but are not limited to UITs (unit investment trusts) ETFs (exchange traded funds), private equity funds such as venture investment pools, mutual funds etc. Before the earliest effective filing date of the present application, no one used ETFs for sectors. Generally, such vehicles allow investors to buy small pieces of the vehicle as "units" or shares. A purchaser of such units or shares seeks to gain from professional management of the vehicle and the ability to diversify on a relatively small scale. Managed investment vehicles may be listed on an exchange and trade just like stocks. They are not usually a vehicle for capital formation but rather a derivative investment. However they may also be used for capital formation. In creating such vehicles, segmentation of the universe of possible investments is commonly used to attempt differentiation of the vehicle for marketing purposes as well as portfolio structure and management knowledge and expertise.

### Summary of the Invention

The objects of the present invention are to provide for a novel method of selecting investments in an investment portfolio selected from within a broad area of economic activity (specifically, healthcare) and to provide for (market and management) differentiation of such portfolios from those selected by other means. Current practice for portfolio creation and management includes segmentation or analysis of the space consisting of possible investments according to criteria which define regions of the space and its geometry. The space is commonly organized into sets of planes for presentation and discussion and common terminology refers to horizontal and vertical segmentation within those planes. Since there are often more than three criteria for segmentation, it is possible to have multiple sets of planes. Common practice is to define a principal axis or criterion and then group and/or analyze them according to one or more 'dimensions' in the space.

The present invention concerns a novel method of definition of a principal axis or regional boundary within such space for analysis, selection and management purposes.

Specifically, in the field of healthcare, it is proposed to organize investment portfolios according to therapeutic and diagnostic areas. Examples are cardiology, which includes such diseases as stroke and arteriosclerosis, and metabolic-endocrine, which includes diseases like diabetes and obesity. This differs in several significant aspects from conventional methods of segmentation such as horizontal healthcare delivery portfolios (e.g. hospital industry) or vertical portfolios such as 'the surgical supply chain'. Specific therapeutic and diagnostic areas, defined as a 'vertical' for the purposes of portfolio selection, have novel and unexpected utility and confer properties on the portfolio in an unanticipated manner. The following examples should be seen as illustrative rather than limiting.

Therapeutic and diagnostic areas as an 'axis' for defining portfolio selection have some relevant properties including but not limited to:
- They can be viewed as a social and economic problem in the context of healthcare and its delivery, however they can also be viewed as a personal issue. When seen from the latter point of view 'relevance' or motivation (value) is a steeply decreasing function of distance from the afflicted observer
- They create clusters of research and development based on academic focus and scientific progress
- They provide specific insight into and measurement of companies' development programs and define markets as to size and competition

The present invention can be implemented in conjunction with any portfolio selection, management and trading system and is not restricted to public securities or any type of portfolio management or trading structure. It may be implemented via direct or indirect investment methods and can allow user participation via implementations which provide for client participation in purchase decisions.

In recent years (since the mutual fund scandal), Wall Street has been offering a slew of Capital Protected Notes tied to a variety of indices (mostly relating to housing and energy). The present invention allows the creation of structured notes with the return tied to various indices of therapeutic areas. There are new rules which are making Health Savings accounts very popular (see http://www.ustreas.gov/offices/public-affairs/hsa/). Individuals can buy high deductible policies and put up to $3000 (or $5400 for a family) into an HSA where it is treated like a 401K. Blue Cross/Blue Shield is creating a bank to capture these accounts on behalf of their customers.

The present invention permits the creation of structured notes for this market; for example, a diabetic can buy a note with capital guaranty that is tied to the performance of stocks relating to metabolic diagnosis and therapy. The issuer of the notes will use ETFs and related options and futures to hedge the exposure to the appreciation of the index.

The invention, in at least some embodiments, employs a "passive management" investment strategy designed to track the performance of an index (the "Underlying Index") of U.S. and foreign common stocks of healthcare, life sciences or biotechnology companies that are classified or described by the BioCentury or MedTrack databases as a company concerned with a specific therapeutic or diagnostic modality (e.g., a "derma and wound care" company), or in the case of a therapeutically-oriented company, listed on either database as providing products in a specific area (e.g., "derma and wound care" products). Companies in the Underlying Index are involved in the research, clinical development and/or commercialization of therapeutic agents for the treatment of a wide variety of skin disorders including, but not limited to, acne, rosacea, psoriasis, genital warts and atopic dermatitis, by topical or systemic means and provide traditional and innovative means of handling wound care problems. The BioCentury and MedTrack databases are independent, generally available databases of medical life sciences and biotechnology companies; of course, equivalents could be used instead of or in addition to those databases.

As its primary strategy, the Fund attempts to replicate the Underlying Index by investing substantially all of its assets in the stocks that make up the Underlying Index, holding each stock in approximately the same proportion as its weighting in the Underlying Index. The Fund will invest at least 90% of its assets in common stocks of U.S. and Canadian companies in the Underlying Index, or in American Depositary Receipts ("ADRs") or Global Depository Receipts ("GDRs") based on securities of international companies in the Underlying Index. The Fund may also invest up to 10% of its assets in futures contracts, options on futures contracts, options, swaps on securities of companies in the Underlying Index, as well as cash and cash equivalents such as money market instruments (subject to applicable limitations of the 1940 Act). The Fund may also sample, rather than replicate, the Underlying Index by holding stocks that, in the aggregate, are intended to approximate the Underlying Index in terms of key characteristics, such as price/earnings ratio, earnings growth, and dividend yield.

The funds are designed to be representative of diagnostic or therapeutic areas, not performance.

The invention could be adapted for other fields besides healthcare, such as developments in emerging technologies.

Different investment vehicles could be organized for different companies as follows: ETFs for companies representing the current state of the art, business development corporations (BDCs) for companies whose products are in the early stages of trial, and seed-stage investment vehicles for start-up companies on the cutting edge. By way of example, the Cardiology ETF contains 20 companies which have about 400 commercialized products and another 50 in late stage trials which could be approved in 1 to 3 years. The BDC will invest in companies (public and private) which have products that re 3 to 7 years from approval. This is the next generation of treatment. The Seed Stage Funds will have panels of experts who will review the current products (ETFs) and the next generation (BDCs). They will determine what is lacking in terms of development and the seed funds will actually form companies to engage in those activities. This is the complete cycle of Vertical Investing which is deemed to be completely original and unique.

An example of the difference between the vertical and horizontal axes will be explained with reference to Table I below. The table shows a matrix of classifications of companies, arranged by sectors within energy (vertical axis) and by capitalization (horizontal axis). A vertical investment strategy selects companies along a vertical axis, such as oil-field services. A horizontal investment strategy selects companies along a horizontal axis, such as medium capitalization.

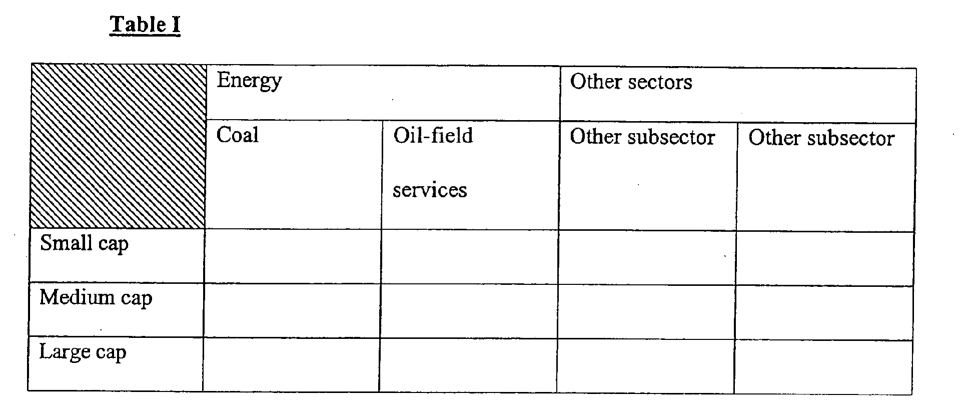

Further information about the invention is found in the inventor's "Form N-1A - Registration statement for open-end management investment companies," SEC Accession No. 000116679-06-000438, available at http://www.sec.gov/Archives/edgar/data/1352853/000111667906000438/0001116679-06-000438.txt, which is hereby incorporated by reference in its entirety into the present disclosure.

### Brief Description of the Drawings

A preferred embodiment of the invention will be described in detail with reference to the drawings, in which:

Fig. 1 shows a flow chart for forming an investment vehicle according to the preferred embodiment;

Fig. 2 shows a schematic diagram of a system for implementing the preferred embodiment; and

Fig. 3 shows a flow chart for weighting and rebalancing the securities in the investment vehicle according to the preferred embodiment.

### Detailed Description of the Preferred Embodiment

A preferred embodiment of the present invention will be set forth in detail with reference to the drawings, in which like reference numerals refer to like elements throughout.

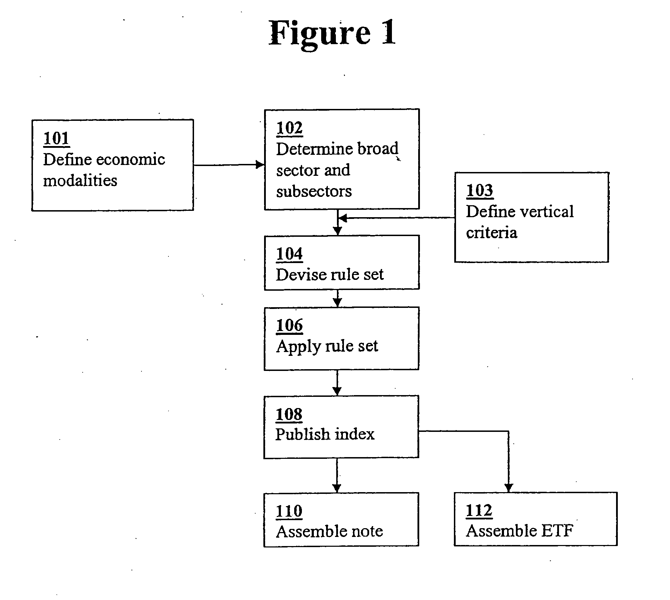

The preferred embodiment will be explained with reference to the flow chart of Fig. 1. In step 101, the economic modalities are defined. In step 102, the analyst determines how the broad sector at hand can logically be broken down into subsectors that have their own distinct economic utility (in the case of health care - therapeutics, diagnostics, and devices, for instance). The subsectors are further refined by identifying a specific economic utility that can be identified as a universal characteristic of a particular vertical, such that the vertical criteria are defined in step 103. In the case of therapeutics, the inventor has identified twelve areas that combine a large enough economic scale with sufficient commonality of goal (i.e. cancer) to qualify as a specific vertical. This concept can then identify a company as belonging to a vertical regardless of size - i.e. a company like Genzyme, with a market cap of $17 billion, is equally a part of a cancer vertical as a small private company with two scientists in a rented lab.

By way of analogy, the invention identifies economic rivers all the way to their source (the Mississippi and all its tributaries) rather than by amount of flow (all rivers with flow of x million cubic feet per second).

In step 104, a rule set is devised that provides an objective determination for assigning a company to a particular vertical. Our therapeutic rule set uses the number of clinical trials and products marketed as the primary determinants of what a company "is".

In step 106, the rule set is applied by an independent calculation agent (in our case Standard & Poor's), to produce an index of companies reflective of the vertical. Our rule set also includes capital market screens to ensure compliance with SEC and exchange regulations.

In step 108, the index is published as a real life representation of a vertical. Our indices are being distributed through Reuters.

In step 110, the structured is then assembled using the blueprint provided by the vertical index, which means that large aggregations of the index components ("creation units") are exchanged for shares of the new structured note, which then trades like a stock. Alternatively, or in addition, an ETF can be assembled in the same way in step 112.

By way of specific example and without in any way intending to limit the generality of the invention or its applications, let us consider a diagnostic or therapeutic modality relating to prostate cancer, such as brachytherapy, as a defining criterion or axis for portfolio selection. For simplicity this axis will be referred to as a 'vertical' hereafter. It should be noted that this is not a biological definition, but rather a patient-relevant definition. Using this criterion a portfolio of companies can be selected as per the following example:

| |
|---|
| Abbott |
| Abgenix |
| Advanced Magnetics |
| Bayer |
| Bristol |
| Celgene |
| Cell Genesys |
| Cytogen |
| Dendreon |
| Genentech |
| ISIS |
| Medarex |
| Myriad |
| North America Scientific |
| Praecis |
| Varian |

These companies are all (as of the date of this filing) involved in development or marketing products which satisfy the criterion of "related to prostate cancer;" in some cases diagnostic, in others therapeutic. Obvious but relevant is that the list is time sensitive and not necessarily complete.

As a further example of the invention's relevance to portfolio construction and management, by deletion of those companies from the above example which are either not involved in the development of therapeutic drug products directed towards prostate cancer or classified by a separate economic sort as large pharma, the following list is generated:

| |
|---|
| Abgenix |
| Advanced Magnetics |
| Celgene |
| Cell Genesys |
| Cytogen |
| Dendreon |
| Genentech |
| ISIS |
| Medarex |
| Myriad |
| Praecis |

This list has significantly different economic characteristics and is an example of the situation of a portfolio which is likely to reflect the economics of product development and scientific progress with respect to the field more directly than a portfolio comprising large companies which, while they may fall within the space as defined by the criterion, are more likely to have numerous other value drivers of comparable impact.

By way of clarification, a portfolio comprising the companies:

| |
|---|
| Abbott |
| Amgen |
| Bayer |
| Genentech |
| Varian |

while falling within the region defined by the criterion arguably lacks economic weighting or leverage according to this criterion.

Portfolio management considerations such as economic leverage, volatility, liquidity etc. will be relevant to the selection and management processes as will the nature of the managed portfolio (private, UIT, ETF, mutual fund, portfolio that is the basis of a derivative such as a future, etc.).

A specifically focused vehicle for investing according to this selection criterion has not existed until the present invention.

Examples of vertical markets within healthcare will be described more fully. Other examples will be given below, and still others will be realized by those skilled in the art who have reviewed the present disclosure. Therefore, the following examples should be seen as illustrative rather than limiting.

1- Companies (in the field of healthcare) can be grouped by specific diagnostic or therapeutic modalities. Individual companies may be engaged in respect to more than one indication. Within that classification, portfolio candidate selection may be carried out by additional sorts according to a number of conventional analytical metrics such as financial condition. Grouping by diagnostic or therapeutic modality as a method of candidate selection is novel and results in a number of unexpected and useful properties of a portfolio selected in that manner. Advantages include market differentiation, portfolio size restriction and the ability to create portfolio management tools that are specific to value drivers related to underlying technology development.

2- If a portfolio of companies selected in the manner described in '1' is created with the further restriction that only companies which have not yet brought products to the specific designated markets are included, a development-stage portfolio can be created. A portfolio structured in this manner can reflect scientific progress and the economic consequences of technology development. Multiple portfolios of this type can be created both within a given category and across several different categories. For example, within a given category, such portfolios may be selected according to stage of development or other criteria which allow segmentation and management of the category according to other investment criteria. The definition of a diagnostic or therapeutic area may be broadened or narrowed according to related selection criteria. Within the practice of the invention, the n-space from which these portfolios are selected, and the boundaries and shape of a region, may be varied significantly.

An important emergent property of such portfolios relates to their relevance to the personal interests of individual investors and consequently to the market characteristics of such portfolios. That property is unexpected and novel for an investment vehicle.

The invention permits creating structured notes which have a specific relevance for individual investors based on their personal (health) interests.

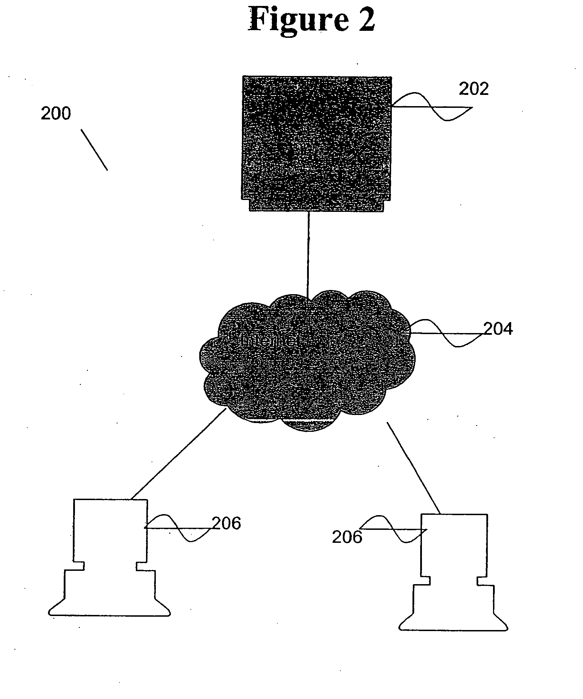

A suitable trading system is shown in the schematic diagram of Fig. 2, although any other suitable trading system can be used instead of, or in addition to, the system 200 of Fig. 2. In the system 200, trading information concerning the investment vehicles is loaded onto a server 202, which is accessible over the Internet 204 by traders using personal computers 206 from their homes or offices, or any other suitable Internet access devices, e.g., third-generation cellular telephones. In particular, the system 200 of Fig. 2 has utility in carrying out steps 102 and 104 of Fig. 1, in which case the server 202 can be configured to implement the required database searching capability. The specifics of the technological implementation of such a system 200 are known in the art and will therefore not be described in detail here.

The following are examples of funds which can be realized within the scope of the invention. Of course, the following list is illustrative rather than limiting.
- Diagnostics Index Fund
- Respiratory/Pulmonary Index Fund
- T-Cancer Index Fund
- M-Cancer Index Fund
- Derma And Wound Care Index Fund
- Ophthalmology Index Fund
- Infectious Disease Index Fund
- Metabolic-Endocrine Disorders Index Fund
- Autoimmune-Inflammation Index Fund
- Central Nervous System Index Fund
- Cardiology Index Fund
- Gastrointestinal/Genitourinary/Gender Health Index Fund

As noted previously, the above funds, and any others which may be formed within the scope of the invention, are based on indices. Those indices (individually, an "Index" and collectively, the "Indices") are designed to serve as benchmarks for tracking various subsectors of the health care, life sciences, and biotechnology sectors of the economy and serve primarily as:
1) Performance benchmark for portfolio managers and investors who invest in the securities of these companies;
2) Performance yardsticks for companies in these sectors;
3) Vehicles for directing attention to the growing importance of the Life Sciences in the US and global economy; and
4) Continuous indicators (context) for developments in the Health Care, Biotechnology, and Life Sciences markets.

The Indices are comprised of public securities of issuers whose business lies in the health care, biotechnology, or life sciences sectors of the economy and which are selected pursuant to certain specific, objective criteria enumerated below, including securities of US and Canadian companies and securities of international companies with depositary receipts in either American (ADR) or global (GDR) form. Such securities must be listed for trading on one of the major US exchanges (The New York Stock Exchange (NYSE), The American Stock Exchange (AMEX) or The Nasdaq Stock Market (NASDAQ)) or on a major Canadian stock exchange, in order to be included in an Index. Decisions regarding additions to and removals from each individual Index are made by an index administrator according to a rule set, typically on a quarterly basis, as discussed below. In addition to meeting certain objective criteria, securities are also evaluated as described further below to ensure their overall consistency with the character, design, and purpose of the Indices. This evaluation is conducted by a policy steering committee.

Component securities within each individual Index are initially equal weighted and are rebalanced, typically quarterly, as described below. The Indices are denominated in US dollars.

To be eligible for inclusion in an Index, component securities must be issued by a company whose business lies in the healthcare, life sciences, or biotechnology sectors of the US, Canadian or global economy in one of the three following general divisions: (a) therapeutics; (b) business activities focused in healthcare, life sciences or biotechnology; or (c) enabling tools and technologies for use in healthcare, life sciences or biotechnology.

Only common equity securities are eligible for inclusion in the Indices. Debt or quasi-debt securities, such as convertible securities, are not eligible.

Securities must meet the following conditions to be eligible for inclusion in an Index.

First, the issuer must be a publicly traded company with securities listed on a major (NYSE, Amex, NASDAQ) U.S. or Canadian Exchange, or if not so listed, have ADRs or GDRs listed on one of the exchanges above.

Second, the issuer must have a market capitalization greater than $100 million and less than $10 billion for at least two of the three preceding quarters.

Third, a therapeutically oriented company must be listed on either BioCentury's (www.biocentury.com) or MedTrack's (www.medtrakservices.com) database as providing products in the relevant therapeutic category corresponding to the component security's subject Index or any potentially eligible company must have been described as possessing the characterization of this subject Index (for example, Company X must have been classified or described by BioCentury or MedTrack as a diagnostics company in order to be eligible for consideration for inclusion in the FW Diagnostics Index).

Fourth, for therapeutic categories only, an issuer must meet any one of the five following tests:
(a) Possess at least ten marketed products in the therapeutic category and at least one clinical trial running in that category;
(b) Possess at least twenty marketed products in the therapeutic category;
(c) Possess a ratio of the number of clinical trials in the therapeutic category to all products marketed greater than or equal to .35 to 1, and have at least two clinical trials in progress;
(d) Possess at least five clinical trials in the therapeutic category; or
(e) Possess a ratio of all the number of products sold plus all compounds in clinical trials in the therapeutic category to its entire product universe (either in trail stage or being actively marketed) greater than or equal to 5 to 1.

Item (a) and (b) are designed to demonstrate the "commercial" nexus of the issuer to the relevant therapeutic category. Items (c) and (d) are designed to establish the "research' nexus of the issuer to that category. Item (e) illustrates the "overall intensity and business focus" of the issuer to that category relative to any other therapeutic category effort.

Fifth, issuers with less than $100 million in annual revenues from product sales (based on most recent audited financial statements) must have at least the equivalent of one year's operating costs in cash on its balance sheet.

Sixth, at least 23 issuers must satisfy these inclusion criteria for any one Index. A minimum of 20 component securities will be represented in each Index, with at least three qualifying securities in reserve. The index administrator will determine which securities to be included in each Index. In making such determination, the index administrator will select serially the largest companies by market capitalization for inclusion in the Index.

The following circumstances will result in removal of securities from an Index: bankruptcy of the issuer; delisting of the issuer's securities from all major US and Canadian exchanges; acquisition or merger of the Issuer or the announcement of its acquisition or merger, by or into another company which does not satisfy the inclusion criteria for the Index in which the component security is contained; lack of reasonable liquidity for the security, defined as no trading activity involving the security on a principal exchange within any ten consecutive business day period; and that the security no longer meets the inclusion criteria set forth above.

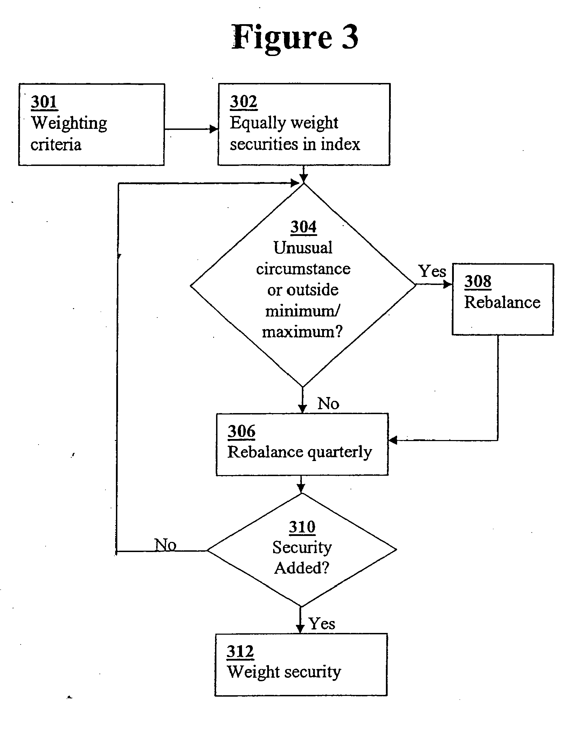

Each Index is created and maintained through a process of weighting and rebalancing, which will be explained with reference to the flow chart of Fig. 3. The general concepts of weighting and rebalancing are known in the art; however, their use in the context of the present invention is deemed to be novel.

At inception, in step 302, the securities in each Index are weighted, either equally or in accordance with weighting criteria determined in step 301. Weightings are determined using a formula which considers the share price of each individual component security to arrive at an equal dollar value of each component security within the Index. The dollar values of each component security are aggregated and divided by an appropriate divisor to yield the starting value of each Index.

Except in unusual and unexpected circumstances (such as, but not limited to, tender offers, spin-offs, or the acquisition or bankruptcy of the Issuer), or the circumstances to be described below, as determined in step 304, rebalancing is done quarterly in step 306. Rebalancing occurs to reflect changes in the weightings of component securities in each Index resulting from changes in the market price of individual component securities. If one of the circumstances which trigger rebalancing is determined to be present in step 304, rebalancing is performed in step 308 in addition to the quarterly rebalancing.

The maximum weight for a security is 15% of any given Index. If such a weighting is exceeded, the Index will be rebalanced in step 308 to reduce the weighting of the security in question to 10%, with the 5% "excess" applied equally to all the remaining component securities in the Index.

The minimum weight for a security is 2.5% of any given Index. If a security's weighting falls below 2.5%, the Index will be rebalanced in step 308 to increase the weighting of the security in question to its initial weighting or 5%, whichever is less, with the required increment taken equally from all the remaining component securities in the Index.

The following applies to ETF Indices only. All Indices that form the basis for a target index for an exchange-traded fund shall not hold a position in an issuer such that the exchange-traded fund would be required, if it were to replicate the Index, to make filings under Sections 13 or 16 of the Securities Exchange Act of 1934. To avoid such a situation, rebalancing is performed in step 308.

Securities added to an Index after its inception, as determined in step 310, are weighted in step 312 by taking the average Index weighting of the 3 component securities already in the Index that are closest in market capitalization to the security being added to the Index.

Valuation of component securities in an Index is based on the last sale price recorded at the primary exchange on which a security is traded, i.e., the relevant Canadian exchange or the NYSE, AMEX, or NASDAQ. If trading in a component security is suspended or halted, the Index Administrator shall, in good faith, determine the fair value of such security.

The Index Administrator is responsible for Index maintenance, including monitoring and implementing adjustments, additions and deletions, share changes, stock splits, dividends, and stock price adjustments due to restructurings, spin-offs, and other corporate actions.

A Calculation Agent will be responsible for compiling, calculating, maintaining, and disseminating the values of the Indices.

A spin-off is the distribution to existing shareholders of a part of a company's business through the issuance of shares in the newly established company. Both the distributing and newly established company will be evaluated at the next quarterly rebalancing (Fig. 3, step 306) to ensure continued and possibly new compliance with inclusion criteria for an Index.

An Index component that is the subject of a tender offer will ordinarily be removed at the earliest of:
(a) Reasonable evidence (as determined by the Index Administrator or the FW Index Committee) that more than 80% of the total underlying shares have been tendered (or a higher percentage in connection with conditional offers) or are likely to be so tendered;
(b) Delisting from the primary exchange; or
(c) Announcement that the tender offer is mandatory.

The Index Committee may exercise its reasonable judgment to make adjustments to the composition of an Index, whether or not the conditions for inclusion are satisfied, to more accurately reflect the intended focus of a particular Index. In making such determinations, the Index Committee shall seek to ensure the overall consistency of each component security with the character, design, and purpose of each individual Index in an effort to further its use as an effective benchmark.

Unless more frequent reviews are necessitated by security specific events, the Index Administrator shall review and adjust, if necessary, the Index on a quarterly basis. Except as described above, changes in the composition of the Index will be implemented on a quarterly basis, prior to the opening of trading on the first day that the exchanges are open for the subsequent quarter.

Each Index is ordinarily calculated every business day on which the US stock exchanges are open for trading. Each Index will be calculated on a real time basis (i.e., updated values are normally disseminated every fifteen seconds). Each Index is calculated on a price only basis.

At inception, each Index is an equal-weight index, using a formula based upon the aggregate of prices times appropriate share quantities. Standard index algorithms are used for the calculation and are available upon request from the Calculation Agent.

The Index Administrator shall make every effort to ensure the accuracy of the information used for Index calculation. If errors occur, the Index Administrator shall promptly correct such errors as described below.

Intraday - Reasonable efforts are employed to prevent erroneous data from affecting the Indices. Corrections will be made for incorrect prices and incorrect or missing corporate actions as soon as possible after detection.

Incorrect Index value ticks will not be fixed retroactively. Incorrect daily high/low Index values will be corrected as soon as practical.

Index-Related Data and Divisor Corrections - Incorrect pricing and corporate action data for individual issues in the Index will be corrected upon detection. Incorrect Index divisors will be corrected on the day they are discovered.

Data for all Indices will be available on a real time basis to Distribution Agents. It is contemplated that Index data will be available via worldwide market data vendor networks and other print and electronic information vendors. It is also contemplated that the company maintaining the Indices will publish and make available upon request a complete description of each individual Index, computational methodologies, recent changes, and new developments, along with a detailed listing of Index component securities.

While a preferred embodiment of the present invention has been described above in detail, those skilled in the art who have reviewed the present disclosure will readily appreciate that other embodiments can be realized within the scope of the invention. The trading system can use a proprietary network or stand-alone system. Also, the specifics of the creation and maintenance of the Indices are illustrative rather than limiting, as are the identities of the Indices themselves. Moreover, other vertical axes could be used. For example, a Himalaya-type investment vehicle for health savings accounts could be formed. Also, geographically specific investment vehicles could be formed, e.g., pan-Asian, European pharmaceuticals, and European medical devices. Still other investment vehicles could be formed, such as an investment vehicle for pollution credits. More generally, the vertical modalities can include either or both of business activity and geography. Therefore, the present invention should be construed as limited only by the appended claims.

## Claims

1. A method for forming an investment vehicle for health care, the method comprising:
(a) selecting entities for investment according to extrinsic criteria which define a subset such that the entities form a vertical subgroup;
(b) restricting the vertical market of step (a) in accordance with at least one investor-observable additional criterion to form a selected set of the entities;
(c) organizing the selected set into a structured note; and
(d) managing or making the structured note available to an investor.

2. The method of claim 1, wherein the entities are subclassified by industry in which product development progress may be assessed according to established criteria such as regulatory approval processes.

3. The method of claim 1, wherein liquidity for the structured note is adjusted to reflect expected time for the entities to bring products to the vertical market.

4. The method of claim 3, wherein the liquidity for the structured note is adjusted to reflect expected time for the entities to bring products to the vertical market.

5. The method of claim 4, wherein the liquidity for the structured note is adjusted to reflect expected time for the entities to bring products to the vertical market.

6. The method of claim 5, wherein the liquidity for the structured note is adjusted to reflect expected time for the entities to bring products to the vertical market.

7. The method of claim 6, wherein the liquidity for the structured note is adjusted to reflect expected time for the entities to bring products to the vertical market.

8. The method of claim 7, wherein the liquidity for the structured note is adjusted to reflect expected time for the entities to bring products to the vertical market.

9. The method of claim 1, wherein, in step (a), the entities are related to health care, and the vertical subgroup is related to diagnostic or therapeutic modalities.

10. The method of claim 9, wherein step (d) comprises making the structured note available to the investor in conjunction with a health savings plan.

11. A system for forming an investment vehicle for health care, the system comprising:
a processor for:
(a) selecting entities for investment according to extrinsic criteria which define a subset such that the entities form a vertical subgroup;
(b) restricting the vertical market of step (a) in accordance with at least one investor-observable additional criterion to form a selected set of the entities;
(c) organizing the selected set into a structured note; and
(d) managing or making the structured note available to an investor; and
a communication component, in communication with the processor, for providing communication between the processor and the investor in regard to the structured note.

12. The system of claim 11, wherein the processor subclassifies the entities by industry in which product development progress may be assessed according to established criteria such as regulatory approval processes.

13. The system of claim 11, wherein the processor adjusts liquidity for the structured note to reflect expected time for the entities to bring products to the vertical market.

14. The system of claim 13, wherein the processor adjusts the liquidity for the structured note to reflect expected time for the entities to bring products to the vertical market.

15. The system of claim 14, wherein the processor adjusts the liquidity for the structured note to reflect expected time for the entities to bring products to the vertical market.

16. The system of claim 15, wherein the processor adjusts the liquidity for the structured note to reflect expected time for the entities to bring products to the vertical market.

17. The system of claim 16, wherein the processor adjusts the liquidity for the structured note to reflect expected time for the entities to bring products to the vertical market.

18. The system of claim 17, wherein the processor adjusts the liquidity for the structured note to reflect expected time for the entities to bring products to the vertical market.

19. The system of claim 11, wherein, in step (a), the entities are related to health care, and the vertical subgroup is related to diagnostic or therapeutic modalities.

20. The system of claim 19, wherein the processor performs step (d) by making the structured note available to the investor in conjunction with a health savings plan.

21. An article of manufacture for forming an investment vehicle for health care, the article of manufacture comprising:
a computer-readable medium; and
code stored on the computer-readable medium, the code, when executed on a computer, controlling the computer to form the investment vehicle by:
(a) selecting entities for investment according to extrinsic criteria which define a subset such that the entities form a vertical subgroup;
(b) restricting the vertical market of step (a) in accordance with at least one investor-observable additional criterion to form a selected set of the entities;
(c) organizing the selected set into a structured note; and
(d) managing or making the structured note available to an investor.

22. The article of manufacture of claim 21, wherein the entities are subclassified by industry in which product development progress may be assessed according to established criteria such as regulatory approval processes.

23. The article of manufacture of claim 21, wherein liquidity for the structured note is adjusted to reflect expected time for the entities to bring products to the vertical market.

24. The article of manufacture of claim 23, wherein the liquidity for the structured note is adjusted to reflect expected time for the entities to bring products to the vertical market.

25. The article of manufacture of claim 24, wherein the liquidity for the structured note is adjusted to reflect expected time for the entities to bring products to the vertical market.

26. The article of manufacture of claim 25, wherein the liquidity for the structured note is adjusted to reflect expected time for the entities to bring products to the vertical market.

27. The article of manufacture of claim 26, wherein the liquidity for the structured note is adjusted to reflect expected time for the entities to bring products to the vertical market.

28. The article of manufacture of claim 27, wherein the liquidity for the structured note is adjusted to reflect expected time for the entities to bring products to the vertical market.

29. The article of manufacture of claim 21, wherein, in step (a), the entities are related to health care, and the vertical subgroup is related to diagnostic or therapeutic modalities.

30. The article of manufacture of claim 29, wherein step (d) comprises making the tructured note available to the investor in conjunction with a health savings plan.
